# EUROPEAN PATENT APPLICATION

(11) **EP 0 994 170 A2**
(43) Date of publication of application: **19.04.2000**
(21) Application number: 99308048.0
(22) Date of filing: 12.10.1999
(51) Int. Cl.: C09J 9/00, C09J 5/08

(54) **Lightweight adhesive**

(30) Priority: 13.10.1998 GB 9822362
(71) Applicant: EVODE LIMITED, Stafford ST18 3EH (GB)
(72) Inventor: Scott, Andrew R., Stafford, Staffs ST17 9BG (GB); Bowyer, Richard A., Barrow-in-Furness, Cumbria LA14 4EA (GB); Mullock, Christine E.M., Crewe, Cheshire CW2 7LZ (GB)
(74) Representative: Benson, John Everett

(57) **Abstract**

A lightweight adhesive, particularly for use as a tile adhesive, is produced by the addition of hollow filler and/or micro-spheres and/or an air-entrainment agent, together with fibres, to an aqueous organic binding agent for example as an aqueous dispersion.

## Description

The present invention relates to a lightweight adhesive that is particularly useful for fixing ceramic and other tiles, especially to vertical surfaces.

Many types of adhesive exist, and the properties required of them vary considerably depending upon the use to which they are to be put. Clearly adhesive strength to the intended substrate is important, and considerable effort is expended in adhesives development in combining satisfactory adhesive strength with other properties which allow the adhesive to be used in the way desired. Properties of the adhesive must be considered for storage, for application, and for performance during service life. An adhesive must have a reasonable shelf-life, it must be easy to apply, and it must retain its adhesive properties during service where it may be subjected to various mechanical and environmental stresses. These considerations place considerable restrictions on the overall formulation of an adhesive.

For certain adhesives a further consideration is of great significance. Some adhesives do not merely provide an adhesive bond line of no significant thickness, but rather provide some filling to fill irregularities in the substrates to be bonded together. Thus, a considerable volume of adhesive may be required. This is particularly true in the case of tile adhesives, especially ceramic tile adhesives. These adhesives provide a bond between rigid, often brittle, substrates that frequently have a rough surface and are not manufactured to tight tolerances. Part of the function of the adhesive therefore is to fill any surface irregularities. This requirement for a certain thickness of adhesive is of course well recognised in the art. British Standard BS5980:1980, for example, refers to thin-bed and thick-bed fixing. Its successor, EN 12004, may also be noted. Even in the case of thin-bed fixing, adhesive layers of up to 3mm are used, and in the case of thick-bed fixing, adhesive thicknesses range from 3mm to 12mm. In practice, of course, tile adhesives will frequently be used at considerably greater thicknesses than are specified in that British Standard. The use of adhesives in such thick layers puts additional requirements on the properties of the adhesives. Cohesive strength and flexibility may become more important. In addition to such properties there is the important practical consideration of weight. Very large volumes of such adhesives are required for anything but the smallest job. Large volumes result in heavy weights which result in difficulties in transport and handling, and in extreme cases can lead to adhesive slump between application and setting.

The present invention addresses these concerns. The problem is to produce an adhesive, particularly suitable as a tile adhesive, of reduced specific gravity without significantly impairing the other properties required of such adhesives. We have found that the specific gravity of an adhesive can be reduced by the incorporation of hollow filler and/or micro-spheres and/or an air-entrainment agent, together with fibres where necessary to counteract the reduction in cohesive strength or other structural impairment that might otherwise result.

A first embodiment the invention provides a composition suitable for use as a tile adhesive, comprising:
(a) an aqueous organic binding agent preferably as an aqueous dispersion;
(b) hollow filler and/or micro-spheres and/or an air-entrainment agent; and
(c) fibres.

A second embodiment of the invention provides a composition suitable for use as a tile adhesive, comprising an aqueous organic binding agent preferably as an aqueous dispersion and sufficient hollow filler and/or micro- spheres and/or air entrainment agent to result in a specific gravity of the composition of less than 1 g/cm³, and preferably less than 0.6g/cm³, and preferably also fibres.

In a third embodiment the invention provides a composition suitable for use as a tile adhesive, comprising:
(a) an aqueous organic binding agent preferably as an aqueous dispersion;
(b) hollow filler and/or micro-spheres; and
(c) an air-entrainment agent.

In a fourth embodiment the invention provides for the use of (a) hollow filler and/or micro-spheres and (b) fibres and (c) optionally an air-entraining agent, as a means of a reducing density in an adhesive composition.

The adhesive is particularly useful for bonding ceramic tiles, and also for attaching tiles to vertical surfaces. We prefer, although it is not necessary, that the adhesive conform to British Standard BS 5980:1980 and/or to EN 12004. These standards relate to five types of adhesive, and we prefer that the present adhesive be a Type 2 adhesive. Type 2 adhesives are manufactured as ready-for-use mixtures, and they consist of organic binding agents as an aqueous emulsion or latex, generally with mineral filling materials. The organic binding agent preferably comprises one or more homo- or co-polymers of acrylic acid, methacrylic acid, acrylamide, acrylic esters, methacrylic esters, vinyl esters, itaconic esters, vinyl ethers, olefins such as ethylene, styrene, butadiene, acrylonitrile or vinylidene chloride. By such homo- or co-polymers we include carboxylated versions of the basic polymers, such as carboxylated styrene butadiene acrylonitrile. Styrene acrylate co-polymers are preferred for some uses. In order to reduce the specific gravity of the present adhesive, we prefer that the amount of conventional particulate inorganic fillers be kept to a minimum. Most preferably, we prefer that such fillers be substantially absent from the adhesive. A preferred maximum amount of such fillers may be taken as 30% by weight based on the total weight of the composition. A more preferred maximum is 10% by weight.

The micro-spheres may comprise any suitable material, the most important characteristic being their specific gravity. The micro-spheres will, in general, be hollow (in which case they may then constitute said hollow filler), and preferably closed. They will thus trap within them air or other generally inert gas depending on their method of formation. The term "micro-spheres" is well-known, and it will be appreciated that their shape need not be precisely spherical in a mathematical sense. Hollow filler of tubular or ellipsoidal shape may be used. Their size is not critical although we prefer they be sufficiently small that the texture of the adhesive is not adversely effected, and that they be sufficiently small in relation to their wall thickness that they be resistant to crushing during manufacture, use and service life of the adhesive. All of the micro-spheres present in any given sample of adhesive need not, of course, be of identical size. We prefer that the average diameter of the micro-spheres be from 10 to 500 microns; and we prefer that at least 50% preferably at least 75%, especially at least 90%, and most preferably substantially all, of the micro-spheres be within that range. Where the micro-spheres or hollow filler are not spherical, one may take as their diameter the diameter of a sphere of identical volume.

The material from which the micro-spheres are made may be selected from a wide variety of possibilities, thermoplastic polymers, glasses and ceramics all being acceptable. We have found borosilicate, particularly soda lime borosilicate, glass shells in the form of bubbles or beads to be particularly suitable as the micro-spheres. Those marketed under the trademark "Scotchlite" are useful, but at present we prefer a product marketed under the trade mark "Expancel", which is made from a thermoplastic polymer encapsulating a gas. Particularly preferred versions are known by the trademarks "Scotchlite K1" and "Expancel 551 WE".

We have found that a considerable volume of such micro-spheres can be combined with an organic binding agent to form an aqueous dispersion to provide a composition having the physical properties desired of a tile adhesive. Due to the very low specific gravity of the micro-spheres, the overall specific gravity of the composition is-considerably reduced. For many purposes up to 40% by weight, generally from 10 to 40% by weight of micro-spheres may be provided based on the total weight of solids in the composition. Design of adhesives is inevitably a compromise, and as the content of micro-spheres increases the structural properties of the composition are likely to deteriorate somewhat. It is surprising, however, that significant reductions in specific gravity can be achieved at such little cost to these structural properties. Nonetheless, where very large additions of micro-spheres are desirable, or where some property such as cohesive strength, elongation or modulus is critical, we prefer that a certain quantity of fibre be added to the composition. In this way, we are able to compensate for any deleterious effect that the substitution of micro-spheres for conventional inorganic fillers may otherwise cause. A variety of types of fibre, organic or inorganic, may be used. An example of inorganic fibres includes silica whiskers. However, we prefer organic fibres, such as cellulose, polyacrylonitrile and polyethylene. The length, thickness, size distribution and overall amount of the fibres will depend on exactly which physical properties of the composition are most important. For example, if a smooth, deformable, adhesive is required, possibly to allow flow into small cavities, then a lower loading of smaller fibres may be preferred. In general, however, a weight range, based on the total weight of the composition, of from 1 to 20% especially from 2 to 10%, may be taken as typical. Preferred fibres are those of length between 50 and 1500 microns, and we prefer that 50% of the fibres are in that range, more preferably that at least 75% by weight of the fibres have lengths from 100 to 1000 microns.

The reduction in specific gravity brought about by the incorporation of micro-spheres and/or hollow filler may be supplemented by air entrainment by other means. To this end the composition may include an air-entrainment agent. If such an agent is added then air entrained in the composition during its manufacture, for example by vigorous agitation, will remain entrained during storage, application and setting of the adhesive. Thus, the air entrainment agent serves to stabilise a froth-like or foam-like characteristic of the adhesive composition. At least 30% of the volume of the composition is preferably air entrained either as air bubbles within the composition itself and/or within the hollows of the microspheres. Suitable air entrainment agents include soaps, emulsifying or foaming agents, which may act by forming a binding network in bubble walls. Examples include fatty acid ether sulfates, aliphatic carboxylic acid derivatives, and alkyl phenol ethoxylate. One particular example is the sodium salt of a fatty alcohol ether sulfate that is marketed under the trademark "Perlankrol ESK-32". The total weight of air-entrainment agent required will of course depend on the nature of the adhesive required and on the nature of the air-entraining agent itself. However, a weight range of 0.1 to 1% by weight based on the total weight of the composition may be taken as typical.

A further useful component is a coalescing solvent which acts to reduce the ambient temperature at which the adhesive composition forms a film. Suitable coalescing solvents include butyl diglycol acetate, di-isobutyl glutarate, and ethylene glycol. The amount of the coalescing solvent is preferably from 0.5 to 6%, more preferably 1 to 2%, by weight based on the total weight of the composition. In general, the amount required will depend upon the amount and nature of the organic binding agent.

Various other additives may be provided in the adhesive composition, some of the more important of which may be mentioned.

Preferred compositions of the invention may be classified as dispersion adhesives since they are based on organic binding materials in the form for example of aqueous emulsions or latexes. In some circumstances, however, aqueous solutions may be used. In any case, water will be present. The amount of water will usually be more than 20%, particularly more than 40% and often more than 50% by weight based on the total weight of the composition. Nonetheless, a solids content of from 10 to 60 percent based on the total weight of the composition will usually produce good results. The composition may be manufactured by mixing together various components, some of which are themselves emulsions, dispersions or solutions. The percentages of water just quoted of course include water added as such during manufacture and water added as part of such other components.

The structural characteristics of the adhesive composition may be improved, not only by the addition of the fibres, but also by the addition of one or more swelling clay minerals. In particular, swelling clay minerals may reduce or prevent slip. These minerals should be homogeneously distributed throughout the composition. As a result, structure is improved by thickening the composition. The clay may be of synthetic or natural origin and may exhibit a wide range of swelling ability. Preferred materials are smectite minerals such as montmorillonite when in calcium or magnesium form, or hectorite or laponite when in sodium form. Alternative swelling clays are attapulgite and sepiolite. The quantity of swelling clay thickener is preferably at least 0.2 and more preferably at least 0.5%, and is preferably less than 10%, more preferably less than 5% based on the total weight of the composition. The amount added will depend in part on the swelling ability of the clay. Additional thickeners may be added such as polyacrylic acid polymers and/or cellulose thickeners, examples of which include methyl hydroxy propyl cellulose, carboxy methyl cellulose and ethyl hydroxy cellulose. The preferred amount of such thickeners is from 0.1 to 5% by weight based on the total weight of the composition.

The next additive that may be considered is a cationic scavenger. Such materials may be added in order to reduce or to prevent thickening of the adhesive composition during storage. A suitable cationic scavenger is a phosphate material, for example sodium hexametaphosphate.

The preferred amount of the cationic scavenger is from 0.1 to 1% by weight based on the total weight of the composition. The performance of such scavengers depends on pH, and to optimise the performance we prefer that the pH of the composition be at least 8.0, for example from 8.5 to 13.

Various other additives may be provided depending upon the precise use of the composition. For example, one may include one or more fungicides, one or more pigments, one or more dispersants, one or more adhesion promoters, crosslinkers, silica, and other additives conventionally used in the adhesives industry.

The invention will now be further illustrated by the following examples. In these examples adhesives were prepared suitable for use as tile adhesives. Two examples (examples 4 and 6) meet the requirements of Type 2 adhesives within British standard BS 5980:1980. The adhesives met the requirement of Class B within that standard. Also, the adhesives of these two examples when tested by the methods set out in the standard, exhibited a tensile adhesive strength of not less than 950 N after conditioning for fourteen days. Furthermore, these two adhesives exhibited a shear adhesive strength, again when tested in accordance with the standard, of not less than 8.9 kN after conditioning for fourteen days; and shear adhesive strength of not less than 4.5 kN after conditioning for seven days, followed by seven days in an oven at a temperature of 100 +/- 2 °C.

This standard is not mandatory, and even adhesives exhibiting lower adhesive strength than that specified in the standard could nonetheless be useful for many applications.

In each case the compositions have an appearance of a mousse and were suitable for application to a vertical surface at a thickness of 0.5 cm without slump. In general, all examples showed excellent viscosity, low density, non-slip capability, flexibility and wetting character.

| Example 1 | |
|---|---|
| Water | 33.81 |
| Dispex G40 | 0.49 |
| Acticide BX | 0.10 |
| Acticide DW | 0.05 |
| Butyl diglycol acetate | 1.29 |
| Celacol B176 | 0.82 |
| Attagel 30 | 0.40 |
| Arbocel B400 | 3.71 |
| Texicryl 13-038 | 27.81 |
| Expancel 551 WE | 27.73 |
| Scotchlite K1 | 1.84 |
| Silane A187 | 1.95 |
| TOTAL = | 100.00 |
| Relative density = | 0.34 |
| pH = | 7.95 |

| Example 2 | |
|---|---|
| Water | 23.59 |
| Dispex G40 | 0.52 |
| Acticide BX | 0.10 |
| Acticide DW | 0.05 |
| Butyl Diglycol acetate | 1.37 |
| Celacol B176 | 0.87 |
| Attagel 30 | 0.42 |
| Arbocel B400 | 3.94 |
| Texicryl 13-038 | 37.44 |
| Expanacel 551 WE | 29.44 |
| Scotchlite K1 | 1.96 |
| TOTAL = | 100.00 |
| Relative density = | 0.34 |
| pH = | 7.65 |

| Example 3 | |
|---|---|
| Water | 34.51 |
| Dispex G40 | 0.50 |
| Acticide BX | 0.10 |
| Acticide DW | 0.05 |
| Butyl diglycol acetate | 1.31 |
| Celacol B176 | 0.84 |
| Attagel 30 | 0.41 |
| Arbocel B400 | 3.78 |
| Texicryl 13-038 | 28.39 |
| Expancel 551 WE | 25.58 |
| Z Light Spheres W1000 | 4.53 |
| TOTAL = | 100.00 |
| Relative density = | 0.37 |
| pH = | 7.32 |

| Example 4 | |
|---|---|
| Water | 44.59 |
| Dispex G40 | 0.78 |
| Acticide BX | 0.10 |
| Acticide DW | 0.05 |
| Butyl diglycol acetate | 1.25 |
| Calgon PT (50%) | 0.31 |
| Carbopol EZ1 | 0.78 |
| Bermocoll E481FQ | 0.47 |
| AMP 95 | 0.31 |
| Attagel 30 | 0.65 |
| Arbocel B400 | 4.66 |
| Perlankrol ESK32 | 0.31 |
| Texicryl 13-038 | 24.90 |
| Expancel 551 WE | 20.84 |
| TOTAL = | 100.00 |
| Relative density = | 0.48 |
| pH = | 6.02 |

| Example 5 | |
|---|---|
| Water | 44.14 |
| Dispex G40 | 0.77 |
| Acticide BX | 0.10 |
| Acticide DW | 0.05 |
| Butyl diglycol acetate | 1.24 |
| Calgon PT (50%) | 0.31 |
| Carbopol EZ1 | 0.77 |
| Bermocoll E481FQ | 0.46 |
| AMP 95 | 0.31 |
| Attagel 30 | 0.64 |
| Arbocel B400 | 4.62 |
| Perlankrol ESK32 | 0.31 |
| Texicryl 13-038 | 24.65 |
| Expancel 551 WE | 20.63 |
| Silane A187 | 0.98 |
| TOTAL = | 100.00 |
| Relative density = | 0.45 |
| pH = | 6.39 |

| Example 6 | |
|---|---|
| Water | 35.70 |
| Dispex G40 | 0.77 |
| Acticide BX | 0.10 |
| Acticide DW | 0.05 |
| Butyl diglycol acetate | 1.48 |
| Calgon PT (50%) | 0.31 |
| Carbopol EZ1 | 0.77 |
| Bermocoll E481FQ | 0.46 |
| AMP 95 | 0.31 |
| Attagel 30 | 0.64 |
| Arbocel B400 | 4.57 |
| Perlankrol ESK32 | 0.31 |
| Repolem 4432 | 33.16 |
| Expancel 551 WE | 20.40 |
| Silane A174 | 0.97 |
| TOTAL = | 100.00 |
| Relative density = | 0.47 |
| pH = | 6.76 |

The shear adhesion exhibited by the adhesives of the above examples were as shown in the table below.

| | | BS Standard 5980:1980 | Ex.1 | Ex.2 | Ex.3 | Ex.4 | Ex.5 | Ex.6 |
|---|---|---|---|---|---|---|---|---|
| Shear adhesion kN / 100mm x 90mm | 14 days at room temp | 8.90 | 5.85 | 5.83 | 5.79 | 9.34 | 8.24 | 12.10 |
| | 7 days at room temp | 4.50 | 2.10 | 2.39 | 2.09 | 5.21 | 4.67 | 4.73 |

In the above Examples the materials identified by trade names have the following chemistry and function.

| | | |
|---|---|---|
| | | |

| **Trade name** | **Chemical Type** | **Function** |
|---|---|---|
| Dispex G40 | Sodium salt of carboxylated copolymer | Surfactant |
| Acticide BX | Preparation from N-formals and isothialozones | In-can biocide |
| Acticide DW | Preparation of 2-Octyl-2H-isothiazol-3-one | Dry film biocide |
| Calgon PT | Sodium hexa meta phosphate | Cation scavenger |
| Carbopol EZ1 | Poly acrylic acid | Thickener |
| Bermocoll E481FQ | High viscosity grade ethyl hydroxyethyl cellulose | Cellulosic thickener |
| AMP 95 | 2-amino-2-methyl-1-propenol | pH adjuster |
| Celacol B176 | Modified cellulose ether | Cellulosic thickener |
| Arbocel B400 | Natural cellulose fibre | Fibre filler |
| Texicryl 13-038 | Styrene acrylic copolymer (50% dispersion in water) | Base polymer |
| Butyl diglycol acetate | Butyl diglycol acetate | Coalescing solvent |
| Attagel 30 | Hydrated magnesium aluminium silicate | Swelling clay |
| Perlankrol ESK-32 | Fatty alcohol ether sulphate (sodium salt) | Air entrainer |
| Expancel 551 WE | Copolymer encapsulating a blowing agent | Lightweight filler |
| Scotchlite K1 | Soda lime borosilicate glass bubbles | lightweight filler |
| Silane A187 | γ-Glycidoxy propyl trimethoxy silane | Adhesion promoter |
| Repolem 4432 | Styrene-acrylic ester copolymer | Base polymer |

## Claims

1. A composition suitable for use as a tile adhesive, comprising:
(a) an aqueous organic binding agent;
(b) hollow filler and/or micro-spheres and/or an air-entrainment agent; and
(c) fibres.

2. A composition suitable for use as a tile adhesive, comprising an aqueous organic binding agent and sufficient hollow filler and/or micro-spheres and/or air-entrainment agent to result in a specific gravity of the composition of less than 1 g/cm³.

3. A composition suitable for use as a tile adhesive, comprising:
(a) an aqueous organic binding agent;
(b) hollow filler and/or micro-spheres; and
(c) an air-entrainment agent.

4. A composition according to claim 1, 2 or 3 in which the aqueous organic binding agent comprises an aqueous dispersion.

5. A composition according to any preceding claim containing micro-spheres.

6. A composition according to claim 2 or 3 which additionally comprises fibres.

7. A composition according to claim 5 in which the micro-spheres comprise a thermoplastic polymer, boro-silicate glass or ceramic shells encapsulating a gas.

8. A composition according to claim 5 or 7, in which the micro-spheres have an average diameter of from 10 to 500 microns.

9. A composition according to any preceding claim, containing from 10 to 40 percent by weight of micro-spheres based on the total weight of solids in the composition.

10. A composition according to claim 1 or6, in which the fibres comprise cellulose, polyacrylonitrile or polyethylene.

11. A composition according to claim 1, 6 or 10, in which at least 50% of the fibres are from 50 to 1500 microns in length.

12. A composition according to any preceding claim, containing from 1 to 20 percent by weight of fibres based on the total weight of the composition.

13. A composition according to any preceding claim, which contains less than 30 percent by weight of inorganic particulate filler based on the total weight of the composition.

14. A composition according to any preceding claim, containing from 10 to 60 percent solids based on the total weight of the composition.

15. A composition according to any preceding claim, in which the organic binding agent comprises homo- or co-polymers of acrylic acid, methacrylic acid, acrylamide, acrylic esters, methacrylic esters, vinyl esters, itaconic esters, vinyl ethers, olefins, styrene butadiene, acrylonitrile or vinylidene chloride.

16. A composition according to any preceding claim, at least 30 percent of the volume of which is entrained air.

17. A composition according to any preceding claim, containing at least 40% by weight of water based on the total weight of composition.

18. A composition according to any preceding claim, in which the air-entrainment agent comprises a soap and/or a foaming agent.

19. The use of (a) hollow filler and/or micro-spheres, and (b) fibres, and (c) optionally an air-entraining agent, as a means of reducing density in an adhesive composition.

20. The use according to claim 18 in which the adhesive composition is a tile adhesive according to British Standard BS 5980:1980 and/or to EN 12004.
